Europäisches Patentamt

European Patent Office

Office européen des brevets

(11) Publication number: **0 429 259 A1**

# EUROPEAN PATENT APPLICATION

(21) Application number: 90312495.6

(22) Date of filing: 16.11.90

(51) Int. Cl.5: **A47F 9/04**, G06K 7/10

(30) Priority: 22.11.89 US 440568

(43) Date of publication of application:
29.05.91 Bulletin 91/22

(84) Designated Contracting States:
DE FR GB

(71) Applicant: **NCR CORPORATION**
**World Headquarters**
**Dayton, Ohio 45479(US)**

(72) Inventor: Leister, Darrel Eugene
1522 Scott Avenue
Cambridge, Ohio 43725(US)

(74) Representative: Robinson, Robert George
International Patent Department NCR Limited
915 High Road North Finchley
London N12 8QJ(GB)

(54) Checkout counter with keypad.

(57) A checkout counter (20) includes an optical scanning system (28) mounted therein for projecting scanning light beams (60) through an aperture (30) in the counter (20) for scanning a coded label attached to a merchandise item (110) positioned adjacent the aperture (30). The counter (20) includes a keypad (32) for use by the checkout operator to input a number representing the number of merchandise items (110) which are of the same type, enabling the items to be checked out without requiring the items to be individually scanped by the optical scanning system (28).

FIG. I

## CHECKOUT COUNTER WITH KEYPAD

The present invention relates to checkout systems and, more particularly, to a checkout counter having means mounted in the checkout counter for processing any number of the same type of merchandise items with one scanning operation.

In order to increase the speed of the checkout operation, optical scanning devices have been incorporated into the checkout counters for reading data encoded indicia on labels affixed to the purchased merchandise items. Movement of the merchandise items. Movement of the merchandise items across the scanning device results in the scanning device reading the encoded indicia labels. In one known system, where a number of the same merchandise items are being checked out, each merchandise item has to be moved across the scanning device in order to insert the merchandise item identification code into the processing system, enabling the processing system to generate the price of the item. It has been found that this type of checkout procedure represents a significant portion of the total time it takes to check ut the purchases of a customer.

In order to overcome this problem, another known checkout system has required the operator to actuate a repeat key on the keyboard of the data terminal associated with the checkout operation for each item that is being repeated.

A problem experienced with this system is that in general the data terminal is spaced from the checkout counter, so that operation of the repeat key is time-consuming and distracts the operator's attention from the items being checked out.

It is therefore an object of the present invention to provide a new and improved checkout system which alleviates problems experienced with known checkout systems.

According to the invention there is provided a checkout system comprising: a checkout counter having a supporting surface for supporting purchased merchandise items; an aperture in said supporting surface; an optical scanner mounted in the checkout counter adjacent the aperture for projecting scanning light beams through the aperture for reading coded labels on a merchandise item positioned adjacent the aperture and outputting the data read from the coded label; and a data terminal device coupled to the optical scanner for receiving the data read from the optical scanner for use in printing a record of the checkout operation; characterised in that a key actuated means is mounted in the checkout counter and coupled to the data terminal device for use by the operator to enter the number of merchandise items being purchased which are the same, enabling the data terminal device to print the total amount due for the purchased merchandise items.

It should be understood that the invention provides a simple system providing rapid checkout for a plurality of merchandise items of the same type.

Embodiments of the invention will now be described by way of example with reference to the accompanying drawings wherein:

Fig. 1 is a perspective view of a portion of a checkout counter showing one embodiment of the present invention;

Fig. 2 is a perspective view of a portion of a checkout counter showing another embodiment of the present invention;

Fig. 3 is a fragmentary perspective view of the mechanical elements of a bar code reader;

Fig. 4 is a schematic diagram of the bar code reader;

Fig. 5 is a block diagram of the checkout system which utilizes the present invention; and

Fig. 6 is a top plan view of a checkout station which includes the checkout counter of Fig. 2 showing the location of the keypad on the checkout counter with respect to the location of the checkout operator.

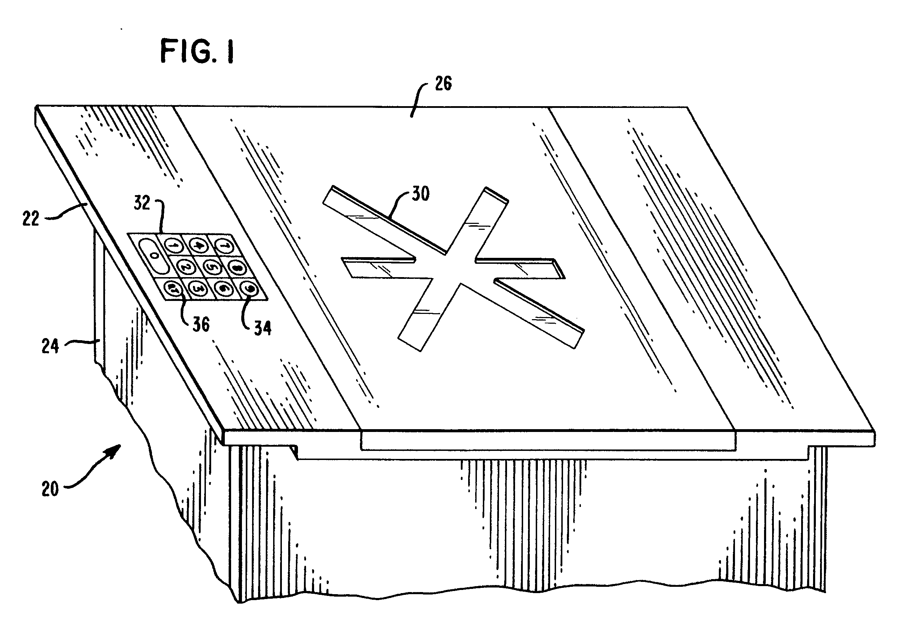

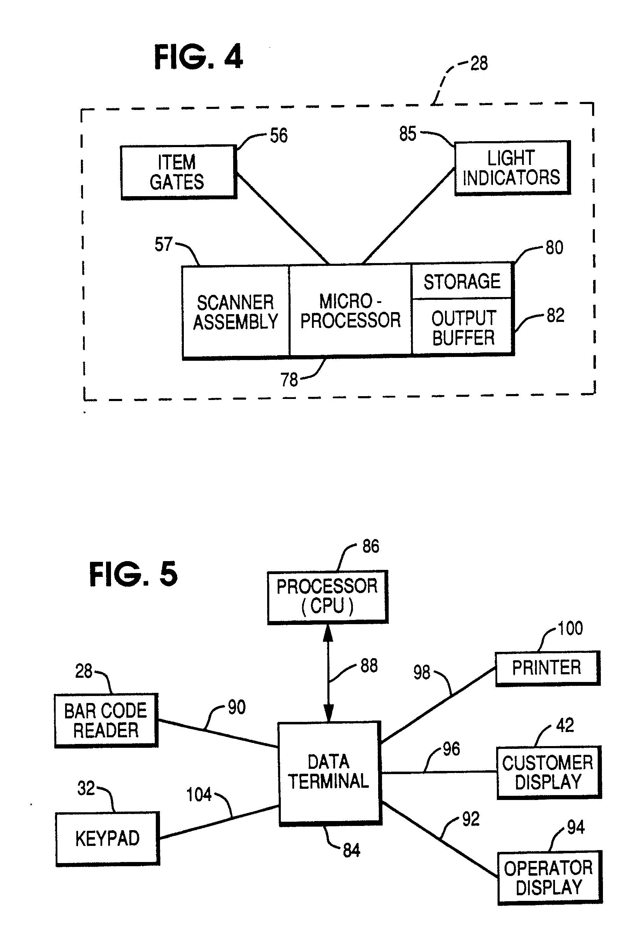

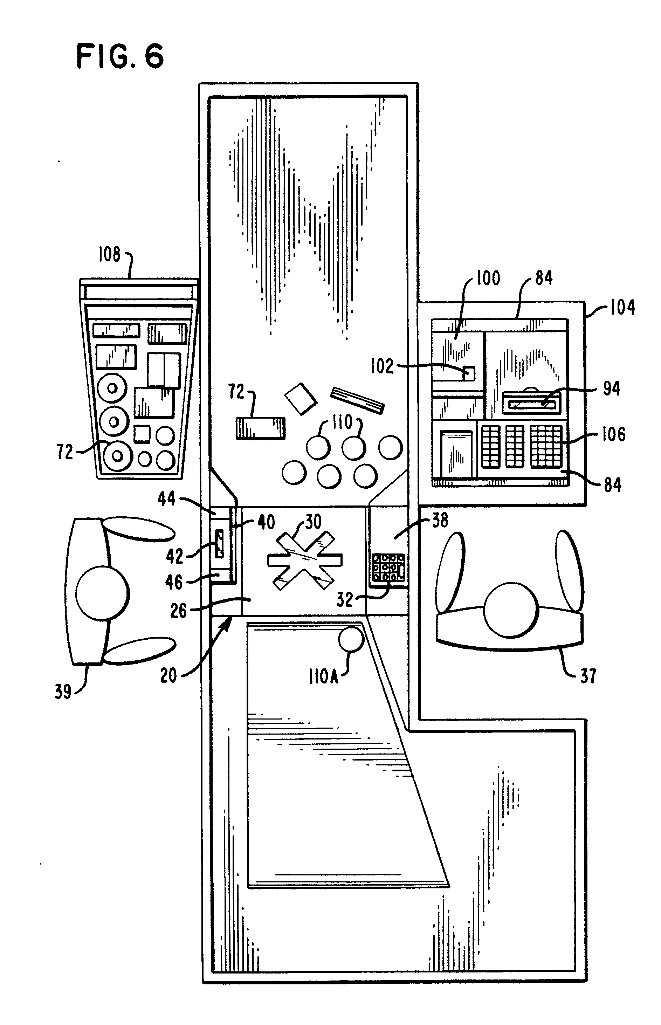

Referring now to Fig. 1, there is shown a perspective view of a portion of a checkout counter generally indicated by the numeral 20 which includes a counter surface 22 and a support stand 24. Mounted flush to the surface 22 is the top surface plate 26 of an optical bar code reader 28 (Fig. 5) mounted within the counter. Located in the top plate 26 is a star-shaped window 30 through which scanning light beams from the bar code reader are projected to scan a bar code pattern on a label attached to a purchased merchandise item moving across the window 30. Mounted in the surface 22 of the counter 20 is a keypad 32 which includes ten numerical keys 34 and a transaction key 36. The keypad 32 is positioned adjacent the operation 37 (Fig. 6).

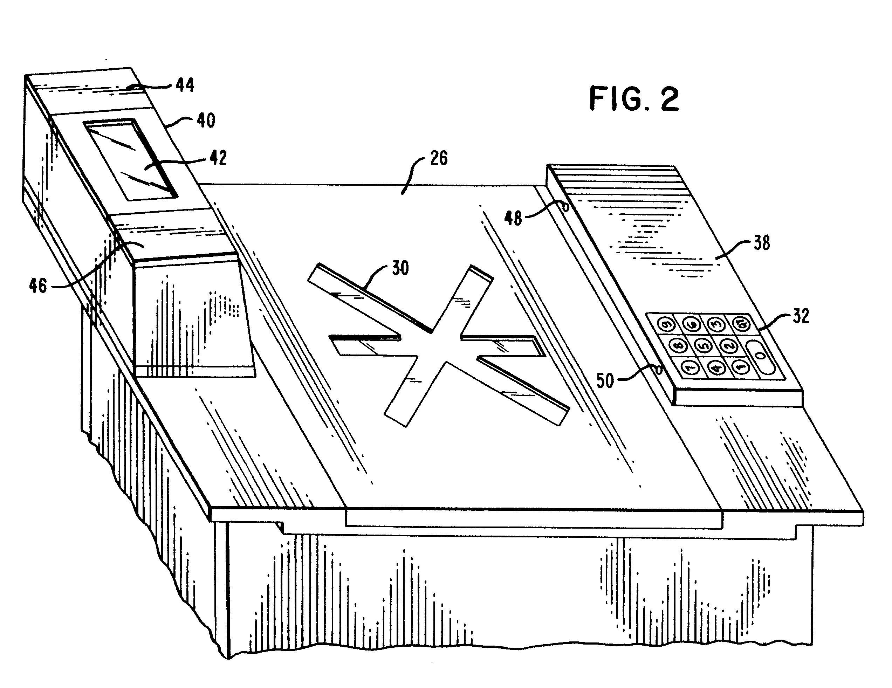

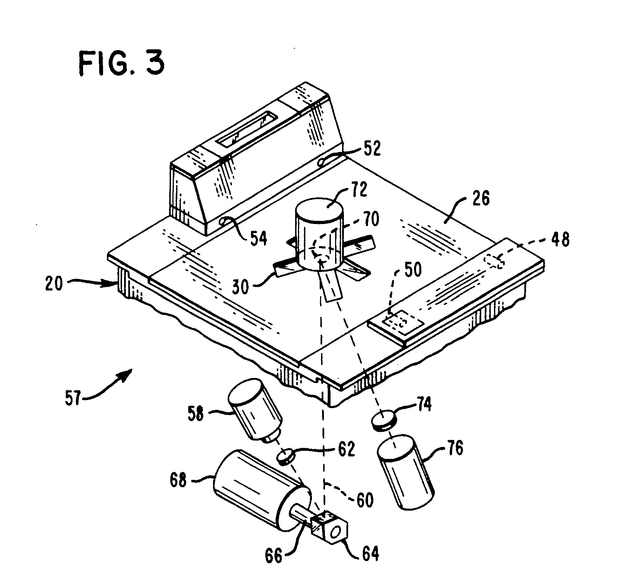

In Fig. 2, there is shown a similar arrangement in which the keypad 32 is mounted in a rail member 38 located along one edge of the counter 20 adjacent the operator 37 (Fig. 6). Located along the opposite side of the counter 20 adjacent the customer 39 (Fig. 6) is a raised housing member 40 which includes a customer display 42 and a pair of indicator lights 44 and 46 indicating whether the scan operation resulted in a good read (green) or a bad read (red). Also located in the rail member 38 and the housing member 40 are oppositely located photodiodes 48 and 50 (Figs. 2 and 3) and photodetectors 52 and 54 (Fig. 3) comprising the item gates unit 56 (Fig. 4) for sensing the presence or absence of a merchandise item on the top surface 22 of the counter 20 for use in controlling the operation of the bar code reader.

Referring now to Fig. 3, there is shown a perspective view of the mechanical structure of the bar code reader 28 (Fig. 5) generally indicated by the numeral 57 which includes a light source 58 emitting an optical light beam 60 in the visible or near visible spectrum, the light beam 60 being focused by a lens system 62 onto a multifaceted mirror 64. The mirror 64 is secured to the shaft 66 of a motor 68 which rotates the mirror 64 at a substantially constant speed. The rotating mirror 64 projects the reflected light beam 60 through the window 30 to scan the encoded indicia on a label 70 attached to a purchased merchandise item 72 positioned adjacent the window 30. The rotation of the mirror 64 results in a succession of light beams 60 forming a scanning pattern which scans the encoded label 70 in a manner that is well known in the art.

The scanning light beams 60 are reflected off the label 70 through an optical filter 74 to a photo-responsive detector device such as a photo-multiplier 76 which converts the reflected light beams into electrical signals, the amplitude of which corresponds to the amount of light received. The electrical signals are transmitted to a microprocessor 78 (Fig. 4) for processing in a manner that will now be described.

Referring now to Fig. 4, there is shown a block diagram of the bar code reader 28 (Fig. 5). The reader includes the scanner assembly 57 (Fig. 3), the microprocessor 78 for checking and decoding the encoded data read by the scanner assembly 57, a conventional memory storage unit 80, an output buffer 82 utilized for transmitting the data read by the scanner assembly to a processor (not shown) located in a data terminal device 84 (Figs. 5 and 6) associated with the checkout counter 20 in a manner to be described hereinafter. Coupled to the microprocessor 78 is the item gates unit 56 which comprises the photodiode 48 and photodetector 52 (Fig. 3) as an upstream item gate and the photodiode 50 and photodetector 54 comprising the downstream item gate. As is well known in the art, the item gates detect the presence or absence of a merchandise item on the top plate 26 (Figs. 1-3 inclusive) of the bar code reader 28 for controlling the operation of the bar code reader. Also coupled to the microprocessor 78 is a light indicators unit 85 comprising the indicator lights 44 and 46 (Fig. 2). The electrical signals representing the data read by the scanner assembly 57 (Fig. 3) and outputted by the photo-multiplier 76 are converted to digital signals and transmitted to the microprocessor 78 which processes the data. The microprocessor 78 will decode and transmit the data to the data terminal device 84 (Figs 5 and 6) which in turn transmits the data to a remote processor 86 (Fig. 5) where the data is used by the processor to look up in lookup tables the price of the purchased merchandise item read by the bar code reader 28.

The microprocessor 78 will also decode and check the encoded data received from the multiplier 76 to determine if the data is valid or not and will generate control signals indicating whether the scanning operation produced a good or bad read. The microprocessor 78 will transmit such signals to the light indicators 44 and 46 (Fig. 2). If a bad read operation is indicated, the operator will then repeat the movement of the purchased merchandise item across the window 30.

Referring now to Fig. 5, there is shown a block diagram of the checkout system which includes the data terminal device 84 (Fig. 6) coupled over line 88 to the remote processor 86 which contains lookup tables containing the price of the purchased merchandise items. Coupled over line 90 to the terminal device is the optical bar code reader 28 for generating data read from the coded label on the purchased merchandise item, which as previously described, is used to obtain the price of the item from the processor 86. The price information is transmitted to the terminal device 84 which outputs over line 92 the price data to an operator display 94 located on the terminal device 84 and over line 96 to the customer display 42 (Fig. 2). The price information is also transmitted over line 98 to a printer 100 located in the terminal device for printing the price of the purchased item on a receipt member 102 (Fig. 6). Coupled over line 104 to the terminal device 84 is the keypad 32 for transmitting data concerning the number of items sold as will now be described.

Referring now to Fig. 6, there is shown a plan view of a checkout station which includes the counter 20 (Figs. 1 and 2), the housing member 40 including the customer display 42 and the indicator lights 44 and 46 (Fig. 2) and the window 30 of the bar code reader 28 (Fig. 6). Mounted in the rail member 38 is the keypad 32 located adjacent the operator 37. Positioned adjacent the counter 20 is a support stand 104 on which is located the data terminal device 84 which includes a keyboard 106, the operator display 94 (Fig. 5), the printer 100 which issues the receipt 102 on which is printed data pertaining to the purchased merchandise items. As part of the checkout operation, the customer 39 will move a shopping cart 108 containing the purchased merchandise items 72 to a position adjacent the window 30. The customer then positions the merchandise items 72 on the counter 20 adjacent the top plate 26 of the bar code reader enabling the operator 37 to move the items past the window 30 as part of the scanning operation. If a number of the merchandise items purchased are the same such as items 110, the operator will count the number of such items and enter the amount in the keypad 32 utilizing the appropriate key 34 (Fig. 1) and move the first of the items 110A past the window 30. The operator will then actuate the transaction key 36 resulting in the data from the keypad being transmitted to a processor (not shown) in the terminal device 84. In response to receiving this data, the processor will enable the terminal device 84 to operate the displays 42 and 94 to display a logo indicating the number of items being processed together with the total price of the items. This information is also printed by the printer 100 as part of the receipt record 102. At the end of the checkout operation, the operator 37 will actuate a total key (not shown) on the keyboard 106 of the terminal device 84 resulting in the issuance of the receipt record 102 by the printer 100 which is removed by the operator and given to the customer as proof of purchase.

It can thus be seen that there has been described a checkout system which increases the speed of the checkout operation where the merchandise items processed include a large number of the same type of merchandise items. The use of a keypad located on the checkout counter adjacent the checkout operator enables the operator to check out a large number of items in the minimum amount of time while requiring very little movement on the part of the operator.

Although the presently preferred embodiments of the invention have been described, it will be understood that various changes may be made within the scope of the appended claims.

Claims

1. A checkout system comprising: a checkout counter (20) having a supporting surface (26) for supporting purchased merchandise items; an aperture (30) in said supporting surface (26); an optical scanner (28) mounted in the checkout counter (20) adjacent the aperture (30) for projecting scanning light beams (60) through the aperture (30) for reading coded labels on a merchandise item (72, 110) positioned adjacent the aperture (30) and outputting the data read from the coded label and a data terminal device (84) coupled to the optical scanner (28) for receiving the data read from the optical scanner (28) for use in printing a record of the checkout operation; characterised in that a key actuated means (32) is mounted in the checkout counter (20) and coupled to the data terminal device (84) for use by the operator to enter the number of merchandise items (110) being purchased which are the same, enabling the data terminal device (84) to print the total amount due for the purchased merchandise items (110).

2. A checkout system according to claim 1 characterised in that the checkout counter (20) includes a rail member (38) extending along one edge of the counter (20) adjacent the checkout operator, said key actuated means (32) being mounted flush with the supporting surface of the rail member (38) for easy access by the checkout operator.

3. A checkout system according to claim 1 characterised in that said key actuated means (32) comprises a keypad (32).

4. A checkout system according to claim 3 characterised in that said keypad (32) comprises a plurality of numerical keys (34) for entering the number of a plurality of merchandise items of the same type, and a transaction key (36) for transmitting said number to said data terminal device (84).

5. A checkout system according to claim 4, characterised in that said data terminal device (84) is arranged to display the price of all the merchandise items of the same type when said transaction key (36) is operated.

FIG. 1

EP 0 429 259 A1

FIG. 2

EP 0 429 259 A1

# FIG. 3

# FIG. 4

```
                                            ┌─ 28
    ┌─────────────────────────────────────────────────────┐
    │                                                      │
    │   ┌──────────┐ ─56        85─ ┌──────────────┐       │
    │   │   ITEM   │               │    LIGHT      │       │
    │   │  GATES   │               │  INDICATORS   │       │
    │   └──────────┘               └──────────────┘       │
    │                                                      │
    │  57─                                    ─80          │
    │   ┌──────────┬──────────┬──────────────┐             │
    │   │          │          │   STORAGE    │             │
    │   │ SCANNER  │  MICRO-  ├──────────────┤ ─82         │
    │   │ ASSEMBLY │PROCESSOR │   OUTPUT     │             │
    │   │          │          │   BUFFER     │             │
    │   └──────────┴──────────┴──────────────┘             │
    │                   78─                                │
    └─────────────────────────────────────────────────────┘
```

# FIG. 5

```
                            ┌─ 86
                    ┌───────────────┐
                    │   PROCESSOR   │
                    │    ( CPU )    │
                    └───────────────┘
                            ↕ ─88                        ─100
  28─                                              ┌──────────┐
 ┌──────────┐      ─90                             │ PRINTER  │
 │ BAR CODE │                                      └──────────┘
 │  READER  │        98─
 └──────────┘    ┌───────────┐              ─42
                 │   DATA    │ ─96    ┌──────────────┐
  32─            │ TERMINAL  │        │  CUSTOMER    │
 ┌──────────┐    └───────────┘        │  DISPLAY     │
 │  KEYPAD  │ ─104    84─             └──────────────┘
 └──────────┘              ─92            ─94
                                    ┌──────────────┐
                                    │  OPERATOR    │
                                    │  DISPLAY     │
                                    └──────────────┘
```

# FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 327 514 (A.W.A.X. PROGETTAZIONE E RICERCA S.R.L.) * abstract; figure 1 * | 1,3,4 | A 47 F 9/04 G 06 K 7/10 |
| A | US-A-4 775 782 (B.M. MERGENTHALER et al.) * abstract; figures 1-3 * | 1-4 | |

TECHNICAL FIELDS SEARCHED (Int. Cl.5)

A 47 F
G 06 K

The present search report has been drawn up for all claims

| Place of search | Date of completion of the search | Examiner |
|---|---|---|
| BERLIN | 19-02-1991 | ZOPF K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)